Europäisches Patentamt

European Patent Office

Office européen des brevets

(19)

(11) Veröffentlichungsnummer: **0 234 413**
**B1**

(12) **EUROPÄISCHE PATENTSCHRIFT**

(45) Veröffentlichungstag der Patentschrift:
**27.12.89**

(51) Int. Cl.⁴: **H02M 3/335**

(21) Anmeldenummer: **87101917.0**

(22) Anmeldetag: **11.02.87**

(54) **Schaltungsanordnung zur Stromversorgung.**

(30) Priorität: **20.02.86 DE 3605360**

(43) Veröffentlichungstag der Anmeldung:
**02.09.87 Patentblatt 87/36**

(45) Bekanntmachung des Hinweises auf die Patenterteilung:
**27.12.89 Patentblatt 89/52**

(84) Benannte Vertragsstaaten:
**AT DE FR GB IT**

(56) Entgegenhaltungen:
**DE-B- 2 937 902**

(73) Patentinhaber: **Blaupunkt-Werke GmbH,
Robert-Bosch-Strasse 200, D-3200 Hildesheim(DE)**

(72) Erfinder: **Bormann, Godehard, Gartenstr. 7,
D-3207 Harsum(DE)**

(74) Vertreter: **Eilers, Norbert, Dipl.-Phys., Blaupunkt-Werke
GmbH Robert-Bosch-Strasse 200,
D-3200 Hildesheim(DE)**

## Beschreibung

Die Erfindung geht aus von einer Schaltungsanordnung nach der Gattung des Hauptanspruchs.

Zur Stromversorgung von Fernsehgeräten sind Spannungswandler bekannt geworden, welche aus der gleichgerichteten Netzspannung die verschieden hohen, zum Betrieb der einzelnen Schaltungen des Gerätes erforderlichen Gleichspannungen ableiten. Diese Spannungswandler haben sich vielfältig bewährt und sind insbesondere durch die Verwendung von integrierten Steuerschaltungen wirtschaftlich herzustellen.

Die Steuerschaltungen sind für eine Betriebsspannung von beispielsweise 12 V ausgelegt. Die gleichgerichtete Netzspannung, welche dem Schaltnetzteil als Eingangsspannung zugeführt wird, ist jedoch wesentlich höher. Deshalb wird bei den bekannten Schaltnetzteilen aus der gleichgerichteten Netzspannung eine Betriebsspannung für die Steuerschaltung mit Hilfe eines Widerstandes abgeleitet, welcher nach dem Einschalten einen Kondensator auflädt. Ist der Kondensator auf eine genügend hohe Spannung aufgeladen, so beginnt die Steuerschaltung und damit das Schaltnetzteil zu arbeiten. Der Kondensator ist derart dimensioniert, daß seine Ladung zum Betrieb der Steuerschaltung ausreicht, bis die Versorgung der Steuerspannung von einer durch das Schaltnetzteil selbst erzeugten Spannung übernommen werden kann.

Die beschriebenen Schaltnetzteile können nicht nur in netzbetriebenen Geräten verwendet werden, sondern durch Vorschalten eines geeigneten Gleichspannungswandlers auch in batteriebetriebenen Geräten, beispielsweise für Kraftfahrzeuge, u. a. Monitore für Omnibus-Anlagen der Blaupunkt-Werke GmbH, mit einer Steuerschaltung TDA 4600 im Schaltnetzteil. Bei diesen Geräten hat es sich herausgestellt, daß nach dem Abschalten des Gerätes mit fallender Eingangsspannung des Schaltnetzteils das Schaltnetzteil einschließlich der Steuerschaltung zunächst zwar abgeschaltet wird, daß sich danach jedoch der Kondensator über den Widerstand aus dem noch nicht vollständig entladenen Ladekondensator wieder auflädt, so daß die Steuerschaltung und damit das Schaltnetzteil erneut zu arbeiten beginnt. Dieser Vorgang kann sich mehrfach wiederholen und macht sich auf dem Bildschirm als störendes Flackern bemerkbar.

Die erfindungsgemäße Schaltungsanordnung mit den kennzeichnenden Merkmalen des Hauptanspruchs hat demgegenüber den Vorteil, daß kein erneutes Wiedereinschalten des Schaltnetzteils nach dem Abschalten des Gerätes auftritt. Als weiterer Vorteil ist anzusehen, daß für die erfindungsgemäße Schaltungsanordnung nur wenige zusätzliche Bauelemente benötigt werden.

Durch die in den Unteransprüchen aufgeführten Maßnahmen sind vorteilhafte Weiterbildungen und Verbesserungen der im Hauptanspruch angegebenen Erfindung möglich.

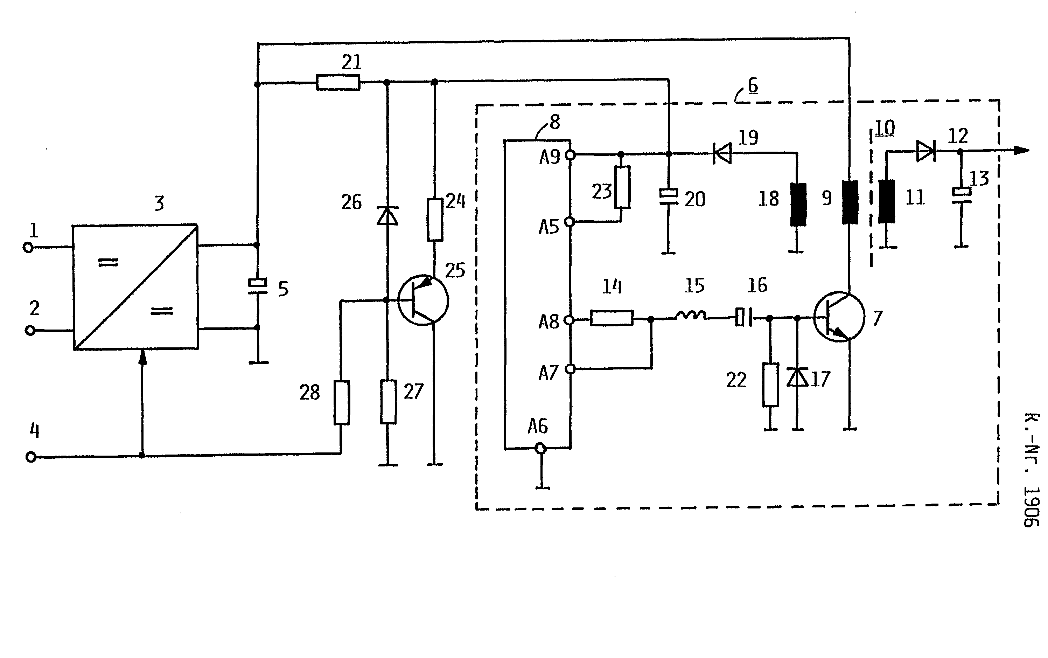

Ein Ausführungsbeispiel der Erfindung ist in der Zeichnung dargestellt und in der nachfolgenden Beschreibung näher erläutert. Die Zeichnung ist teilweise als Blockschaltbild ausgeführt. Teile, die zur Erläuterung der Erfindung notwendig sind, wurden jedoch detaillierter dargestellt.

Den Anschlüssen 1 und 2 eines Gleichspannungswandlers 3 wird, beispielsweise von der Bordbatterie eines Omnibusses, Betriebsspannung zugeführt. Der Gleichspannungswandler 3 ist ein an sich bekannter Schaltwandler und braucht im Zusammenhang mit der vorliegenden Erfindung nicht näher erläutert zu werden. Er kann mit Hilfe einer bei 4 zugeführten Schaltspannung ein- bzw. ausgeschaltet werden. Dabei ist eine Spannung von +24 V dem eingeschalteten Zustand zugeordnet.

Die Ausgangsspannung des Gleichspannungswandlers 3 wird vom Ladekondensator 5 einem Schaltnetzteil 6 als Eingangsspannung zugeführt.

In dem Schaltnetzteil 6 wird der Leistungsschalttransistor 7 von einer Steuerschaltung 8 angesteuert. Als Beispiel sei hier die integrierte Schaltung TDA 4601 genannt. Um Verwechslungen der vom Hersteller der integrierten Schaltung vorgenommenen Anschlußnumerierung mit den Bezugszeichen zu vermeiden, wird im folgenden und in der Zeichnung den Anschlußnummern ein A vorangestellt.

Die Emitter-Kollektor-Strecke des Leistungsschalttransistors 7 ist über die Primärwicklung 9 des Transformators 10 mit dem Ausgang des Gleichspannungswandlers verbunden. Die in der Sekundärwicklung 11 induzierte Spannung wird mit Hilfe der Diode 12 gleichgerichtet und steht am Ladekondensator 13 zur weiteren Verwendung zur Verfügung. Der Einfachheit halber wurde lediglich eine Sekundärwicklung 11 dargestellt, obwohl die meisten derartigen Schaltnetzteile mehrere Sekundärwicklungen aufweisen.

Die Schaltvorgänge des Transistors 7 werden von der Steuerschaltung 8 gesteuert, wozu die Steuerschaltung 8 an den Ausgängen A7 und A8 Steuersignale abgibt. Das am Ausgang A8 anliegende Steuersignal bewirkt eine Steuerung des Leistungsschalttransistors 7 in den leitenden Zustand. Das mit diesem abwechselnd auftretende am Ausgang A7 anliegende Steuersignal sperrt den Leistungsschalttransistor 7. Das eine Steuersignal wird über einen Widerstand 14 und gemeinsam mit dem anderen über die Reihenschaltung einer Induktivität 15 und eines Kondensators 16 der Basis des Leistungsschalttransistors 1 zugeführt. Dabei kann die Induktivität bereits durch die Leitungen gegeben sein, ohne daß es eines zusätzlichen Bauelementes dafür bedarf.

Eine Diode 17 verhindert, daß die Basis-Emitter-Strecke des Leistungsschalttransistors 7 im Spannungsdurchbruch betrieben wird. Ein dazu parallel geschalteter Widerstand 22 ermöglicht einen Umladevorgang des Kondensators 16 beim Übergang vom leitenden in den nichtleitenden Zustand des Leistungsschalttransistors 7.

Der Vollständigkeit halber sei noch darauf hingewiesen, daß die Steuerschaltung 8 weitere Funktionen umfaßt, wie beispielsweise eine Spannungsregelung und eine Abschaltung bei Überlastung des Schaltnetzteils. Diese weiteren Funktionen sowie entsprechende Schaltungsmaßnahmen innerhalb des Schaltnetzteils 6 sind zum Verständnis der Erfindung nicht notwendig und daher nicht näher erläutert.

Während des Betriebes wird die Steuerschaltung 8 von einer Hilfswicklung 18 des Transformators 10, einem Gleichrichter 19 und einem Ladekondensator 20 mit Betriebsspannung versorgt. Da diese jedoch erst beim Betrieb des Schaltnetzteils zur Verfügung steht, wird für den Anlauf der Schaltung über einen Widerstand 21 vom Gleichspannungswandler 3 Strom zugeführt. Um hohe Leistungsverluste zu vermeiden, ist der Widerstand 21 so groß, daß der durch ihn dem Anschluß A9 zugeführte Strom lediglich dazu ausreicht, die Steuerschaltung 8 in Betrieb zu nehmen. Sind die Funktionen der Steuerschaltung 8 im wesentlichen angelaufen, so werden schlagartig in der Steuerschaltung vorhandene Basisstrom-Generatoren, welche mit den Ausgängen A7 und A8 verbunden sind, eingeschaltet, worauf der Leistungsschalttransistor 7 angesteuert wird und damit auch die von der Hilfswicklung 18 erzeugte Spannung zur Verfügung steht. Bis zu diesem ersten Ansteuern des Leistungsschalttransistors 7 hat sich über den Widerstand 21 bereits der Kondensator 20 aufgeladen. Dessen Ladung genügt für das erste Durchsteuern des Leistungsschalttransistors 7.

Ein in der Steuerschaltung 8 enthaltener Bereitschaftsschalter, dessen Steuereingang der Anschluß A5 ist, ist insofern noch für die Erfindung von Interesse, als er über einen Widerstand 23 mit dem Anschluß A9 verbunden ist und die im folgenden sich auf den Anschluß A9 beziehenden erfindungsgemäßen Maßnahmen auch im Zusammenhang mit dem Anschluß A5 durchgeführt werden können.

Der Anschluß A9 ist über einen Widerstand 24 und die Emitter-Kollektor-Strecke eines Transistors 25 mit Massepotential verbunden. Die Basis des Transistors 25 ist einerseits über die Diode 26 an den Anschluß A9 angeschlossen und andererseits über einen Widerstand 27 mit Massepotential verbunden. Ferner ist der Basis des Transistors 25 über einen weiteren Widerstand 28 die Schaltspannung vom Eingang 4 zuführbar. Während des Betriebes des Gerätes beträgt die Schaltspannung 24 V und ist damit größer als die Spannung am Anschluß A9 von etwa 12 V. Der Transistor 25 ist somit nichtleitend, die Diode 26 verhindert einen Durchbruch der Basis-Emitter-Strecke des Transistors 25, während der Widerstand 28 den Strom durch die Diode 26 begrenzt.

Zum Abschalten des Gerätes wird die bei 4 zugeführte Schaltspannung abgeschaltet, d. h. der Anschluß 4 wird hochohmig oder gegen Masse geschaltet. Der Transistor 25 wird dann durch einen über den Transistor 27 fließenden Basisstrom leitend und entlädt den Kondensator 20 über den Widerstand 24, welcher den Entladestrom begrenzt. Über den Widerstand 21 wird ferner der Ladekondensator 5 des Gleichspannungswandlers 3 entladen, so daß ein Wiedereinschalten des Schaltnetzteils sicher verhindert wird.

Die Erfindung kann in vorteilhafter Weise sowohl bei Fernsehempfängern als auch bei Monitoren angewendet werden. Obwohl sich die Beschreibung des Ausführungsbeispiels auf ein Gerät mit einem vorgeschalteten Gleichspannungswandler bezieht, ist auch eine Anwendung bei netzbetriebenen Geräten möglich.

**Patentansprüche**

1. Schaltungsanordnung zur Stromversorgung eines Fernsehgerätes, bei welcher die Eingangsspannung eines Schaltnetzteils (6) aus einer einen Ladekondensator (5) umfassenden Spannungsquelle entnommen wird und von der Eingangsspannung eine Betriebsspannung für eine Steuerschaltung des Schaltnetzteils mit Hilfe eines Längswiderstandes (21) und eines Kondensators (20) abgeleitet wird, dadurch gekennzeichnet, daß dem Kondensator (20) ein steuerbarer Schalter (25) parallelgeschaltet ist, der gemeinsam mit der Spannungsquelle (3) derart steuerbar ist, daß er nichtleitend ist, wenn die Spannungsquelle (3) eingeschaltet ist.

2. Schaltungsanordnung nach Anspruch 1, dadurch gekennzeichnet, daß der steuerbare Schalter (25) ein Transistor ist, welcher mit einem Widerstand (24) in Reihe geschaltet ist, und daß die Basis des Transistors (25) über einen weiteren Widerstand (27) mit Massepotential und über eine Diode (26) mit der Zuführung der Betriebsspannung für die Steuerschaltung (8) verbunden ist.

3. Schaltungsanordnung nach Anspruch 2, dadurch gekennzeichnet, daß der Basis des Transistors (25) eine Schaltspannung zuführbar ist, welche ferner der Spannungsquelle zum Zwecke des Ein- bzw. des Ausschaltens zugeführt ist.

4. Schaltungsanordnung nach Anspruch 3, dadurch gekennzeichnet, daß die Spannungsquelle (3) ein Gleichspannungswandler ist.

5. Schaltungsanordnung nach Anspruch 2, dadurch gekennzeichnet, daß die Spannungsquelle (3) ein Gleichspannungswandler ist und daß der Basis des Transistors (25) über einen Widerstand (28) die Eingangsspannung des Gleichspannungswandlers (3) zuführbar ist.

**Claims**

1. Circuit arrangement for supplying a television set with current, in which the input voltage of a switched mode power supply (6) is taken from a voltage source comprising a charging capacitor (5) and an operating voltage for a control circuit of the switched-mode power supply is derived from the input voltage with the aid of a series resistor (21) and a capacitor (20), characterized in that a controllable switched (25) is connected in parallel with the capacitor (20), which switch is controllable together with the voltage source (3) in such a way that it is nonconductive when the voltage source (3) is switched on.

2. Circuit arrangement according to Claim 1, characterized in that the controllable switch (25) is a transistor which is connected in series with a resistor (24), and in that the base of the transistor (25) is connected via a further resistor (27) to earth potential and via a diode (26) is connected to the feed of the operating voltage for the control circuit (8).

3. Circuit arrangement according to Claim 2, characterized in that a switching voltage can be fed to the base of the transistor (25), which switching voltage can also be fed to the voltage source for the purpose of switching on and off.

4. Circuit arrangement according to Claim 3, characterized in that the voltage source (3) is a direct current converter.

5. Circuit arrangement according to Claim 2, characterized in that the voltage source (3) is a direct current converter and in that the input voltage of the direct current converter (3) can be fed to the base of the transistor (25) via a resistor (28).

## Revendications

1. Circuit d'alimentation en courant d'un téléviseur, dans lequel la tension d'entrée d'une partie de réseau de commutation (6) est prise à une source de tension comprenant un condensateur de charge (5) et la tension d'entrée donne une tension de fonctionnement pour un circuit de commande de la partie du réseau de commutation par l'intermédiaire d'une résistance longitudinale (21) et un condensateur (20), caractérisé en ce que le condensateur (20) comporte en parallèle en commutateur commandé (25) qui est commandé en commun avec la source de tension (3) pour ne pas être conducteur, lorsque la source de tension (3) est mise en œuvre.

2. Circuit selon la revendication 1, caractérisé en ce que le commutateur commandé (25) est un transistor avec en série une résistance (24) et la base du transistor (25) est reliée au potentiel de masse par une autre résistance (27) et reçoit la tension de fonctionnement du circuit de commande (8) par l'intermédiaire d'une diode (26).

3. Circuit selon la revendication 2, caractérisé en ce que la base du transistor (25) reçoit une tension de commutation qui est en outre appliquée à la source de tension pour la mise en route et l'arrêt.

4. Circuit selon la revendication 3, caractérisé en ce que la source de tension est un convertisseur de tension continue.

5. Circuit selon la revendication 2, caractérisé en ce que la source de tension (3) est un convertisseur de tension continue et la base du transistor (25) reçoit la tension d'entrée du convertisseur de tension continue (3) par une résistance (28).

k.-Nr. 1906